# EUROPÄISCHE PATENTSCHRIFT

(11) **EP 2 399 779 B1**
(45) Veröffentlichungstag und Bekanntmachung des Hinweises auf die Patenterteilung: **19.12.2012**
(21) Anmeldenummer: 10167558.5
(22) Anmeldetag: 28.06.2010
(51) Int. Cl.: B60R 1/06

(54) **Außenrückblickspiegel**
External rear view mirror
Rétroviseur extérieur

(43) Veröffentlichungstag der Anmeldung: 28.12.2011
(73) Patentinhaber: SMR Patents S.à.r.l., 1653 Luxembourg (LU)
(72) Erfinder: Herrmann, Andreas, 71364, Winnenden-Baach (DE); Szmolenszki, Istvan, 71409, Schwaikheim (DE)
(74) Vertreter: Weber-Bruls, Dorothée

(56) Entgegenhaltungen:
- EP-A1- 0 031 863
- EP-A1- 0 085 004
- EP-A2- 0 799 745
- DE-A1- 19 701 148
- FR-A1- 2 801 258
- US-A- 4 948 085
- US-A- 6 066 933

## Beschreibung

Die Erfindung betrifft einen Außenrückblickspiegel für ein Kraftfahrzeug gemäß dem Oberbegriff des Anspruchs 1.

Eine Außenrückblickspiegelanordnung für ein Kraftfahrzeug besteht beispielsweise aus einem an dem Kraftfahrzeug angeordneten Spiegelfuß, welcher mittels einer Spiegelfußabdeckung verkleidet sein kann, und einem an dem Spiegelfuß angeordneten Außenrückblickspiegel. Der Spiegelfuß kann beispielsweise als Druckgussteil aus einem den auftretenden Kräften und Momenten widerstehenden Werkstoff hergestellt sein. Der Außenrückblickspiegel umfasst ein Außenrückblickspiegelgehäuse, welches unter anderem einen dem Spiegelfuß zugeordneten Grundträger beherbergt.

Spiegelfuß und Grundträger sind gelenkig miteinander verbunden, so dass der Außenrückblickspiegel gegenüber dem Spiegelfuß aus einer Betriebsstellung in eine Anklappstellung und umgekehrt um eine Gelenkachse verschwenkbar ist. Zwischen Spiegelfuß und Grundträger können Lagermittel vorgesehen sein, um Verschleiß und auftretende Reibungskräfte während des Verschwenkens möglichst gering zu halten.

Der Grundträger kann ebenfalls als Druckgussteil aus einem den auftretenden Kräften und Momenten widerstehenden Werkstoff hergestellt sein, beispielsweise aus dem selben Werkstoff wie der Spiegelfuß. Auf dem Grundträger ist eine beispielsweise elektromotorisch betätigbare Verstellanordnung für ein Spiegelglas angeordnet. Die Verstellanordnung wirkt auf eine Trägerplatte ein, auf der das Spiegelglas angeordnet ist. Das Spiegelglas kann mittels einer Klebeverbindung auf der Trägerplatte montiert sein. Die Trägerplatte kann an der Verstellanordnung und/oder an der Grundplatte geführt und/oder gelagert sein. Der Begriff Trägerplatte bezeichnet hierbei einen Träger, der zumindest eine eben oder gewölbt ausgeführte, geschlossene oder gitterförmig unterbrochene, z.B. wabenförmige Trägerfläche aufweist, die geeignet ist, um darauf ein Spiegelglas etwa mittels einer Klebeverbindung oder durch Einklipsen z.B. hinter am Umfang der Trägerfläche hervorstehende und vom Umfang aus gesehen nach Innen zur Mitte der Trägerfläche hin kragende Rastmittel zu befestigen.

Das Außenrückblickspiegelgehäuse weist auf seiner in Betriebsstellung der Fahrtrichtung des Kraftfahrzeugs abgewandten Rückseite eine Öffnung auf, durch welche hindurch das Spiegelglas sichtbar ist bzw. in welcher das Spiegelglas angeordnet ist. Um eine Verstellbarkeit des Spiegelglases zu gewährleisten, ist allseitig zwischen Spiegelglas bzw. Trägerplatte und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Der Außenrückblickspiegel kann darüber hinaus eine Wiederholblinkleuchte, ein beheizbares Spiegelglas, ein elektrochromatisch abblendbares Spiegelglas, ein Erfassungs- und/oder Warnanzeigemodul für eine Fahrassistenzvorrichtung, wie etwa eine Totwinkelüberwachung, eine Spurverlasswarnung, eine Annäherungsüberwachung, oder dergleichen, oder eine Kombination hiervon aufweisen. Alternativ oder zusätzlich kann der Außenrückblickspiegel wenigstens einen Sensor zur Erfassung von Fahr- und/oder Umgebungszuständen, wie beispielsweise Temperatur, Helligkeit, Verschmutzungsgrad, Beleuchtungssituation aufweisen, beispielsweise um das Spiegelglas automatisch zu beheizen und/oder z.B. elektrochromatisch abzublenden.

Beispielsweise um die Montage der verschiedenen, zumindest zum Teil im Inneren des Außenrückblickspiegelgehäuses beherbergten Bauteile, Bauteilgruppen sowie gegebenenfalls deren elektrische Verbindungen untereinander und/oder mit einem kraftfahrzeugseitig untergebrachten Steuergerät zu vereinfachen, kann das Außenrückblickspiegelgehäuse zumindest zweiteilig ausgeführt sein. Ein erstes Gehäuseteil bildet beispielsweise den Gehäuseboden, ein zweites Gehäuseteil beispielsweise den Gehäusedeckel.

Eines der beiden Gehäuseteile kann dabei eine um die Öffnung für das Spiegelglas herumliegende Gehäusepartie mit die Öffnung umgebenden Wandungen umfassen.

Zusammengefasst besteht ein Außenrückblickspiegel einer Außenrückblickspiegelanordnung aus mehreren miteinander verbundenen Bauteilen, beispielsweise einem ein- oder mehrteiligen Außenrückblickspiegelgehäuse, einem darin beherbergten Grundträger sowie gegebenenfalls einem beispielsweise zumindest zum Teil im Inneren des Außenrückblickspiegelgehäuses beherbergten Wiederholblinkleuchtenmodul für eine Wiederholblinkleuchte.

Ein Ziel bei der Entwicklung und Herstellung von Kraftfahrzeugteilen, wie etwa einer Außenrückblickspiegelanordnung oder einem Außenrückblickspiegel, sind eine einfache und kostengünstige Herstellung sowie eine zeitsparende Montage.

Außenrückblickspiegel mit Montagekonzepten, welche kostspielige und/oder zeitaufwändige Verbindungsmethoden zwischen einzelnen Bauteilen oder Bauteilgruppen vorsehen, stehen diesem Ziel entgegen. Beispiele für zumindest in der Herstellung kostspielige und/oder in der Montage zeitaufwändige Verbindungen sind Verrastungen und/oder Verschraubungen.

Durch EP 0 799 745 B1 ist eine Außenrückblickspiegelanordnung eines Kraftfahrzeugs bekannt. Hierbei handelt es sich um eine schwere Außenrückblickspiegelanordnung für ein Nutzfahrzeug. Eine solche schwere Außenrückblickspiegelanordnung unterscheidet sich von einer einleitend beschriebenen Außenrückblickspiegelanordnung zunächst augenscheinlich im Wesentlichen dadurch, dass das Außenrückblickspiegelgehäuse nicht an einem Spiegelfuß, sondern an dem vertikal verlaufenden Abschnitt eines C-förmigen Spiegelträgerbügels um eine erste vertikale Gelenkachse verschwenkbar angeordnet ist, und dass die horizontal verlaufenden Abschnitte des C-förmigen Spiegelträgerbügels karosserieseitig um eine zweite vertikale Gelenkachse gelenkig angeordnet sind, so dass der Spiegelträgerbügel mitsamt dem Außenrückblickspiegel gegenüber der Karosserie aus einer Betriebsstellung in eine Anklappstellung und umgekehrt um die zweite vertikale Gelenkachse verschwenkbar ist. Um Vibrationen des Außenrückblickspiegels zu unterbinden ohne grundsätzlich die Möglichkeit des Verschwenkens des Spiegelträgerbügels aus der Betriebsstellung in die Anklappstellung und umgekehrt zu verwehren, ist eine ausklinkbare Stütztraverse vorgesehen, die am einen Ende mit dem Spiegelträgerbügel lösbar gekoppelt und mit dem anderen Ende zur Stabilisation des Spiegelträgerbügels an der Karosserie angelenkt ist. Die Stütztraverse bildet in eingeklinktem Zustand eine starre Dreiecksabstützung aufgrund derer der Spiegelträgerbügel stabilisiert wird. Die lösbare Kopplung zwischen der Stütztraverse und dem Spiegelträgerbügel sieht am Spiegelträgerbügel eine im wesentlichen quer zur durch den Spiegelträgerbügel gebildeten Ebene verlaufende, an ihren Enden offene Aufnahmenut und an der Stütztraverse einen in diese unter Reibschluß eingreifenden Verbindungskopf vor. Die Aufnahmenut und der Verbindungskopf weisen einen komplementären, schwalbenschwanzartig ineinander greifenden Querschnitt auf.

Durch gattungsgemäβe US 6,066,933 ist ein Regensensor bekannt, der zwischen einem Träger eines an der Innenseite einer Windschutzscheibe eines Kraftfahrzeugs angeordneten Innenrückblickspiegels und einer an der Innenseite der Windschutzscheibe angeordneten Aufnahme für den Träger angeordnet werden kann. Der Träger und die Aufnahme sind schwalbenschwanzartig miteinander verbunden. Der Regensensor weist ein Gehäuse mit einer komplementären Form auf, die es ermöglicht, den Regensensor zwischen dem Träger und der Aufnahme anzuordnen.

Eine Aufgabe der Erfindung ist es einen Außenrückblickspiegel für ein Kraftfahrzeug zu entwickeln, welcher eine einfache und kostengünstige Herstellung und Montage zulässt.

Die Aufgabe wird gelöst durch die Merkmale des Anspruchs 1.

Demnach ist ein Außenrückblickspiegel für eine Außenrückblickspiegelanordnung eines Kraftfahrzeugs vorgesehen, welcher aus mindestens zwei miteinander verbundenen Bauteilen besteht. Die Verbindung zwischen den Bauteilen umfasst wenigstens eine Verbindungsanordnung, über welche Verbindungsanordnung hinweg vorzugsweise Kräfte in Richtung mindestens zwei verschieden im Raum orientierten, einander schneidenden Achsen, sowie Momente um drei verschieden im Raum orientierte, einander schneidenden Achsen von einem ersten Bauteil auf ein zweites Bauteil übertragen werden können. Die Verbindungsanordnung kennzeichnet sich durch eine an dem ersten der beiden Bauteile angeordnete Feder mit von dem ersten Bauteil aus gesehen zumindest abschnittsweise divergierenden, schrägen Flanken und eine an dem zweiten der beiden Bauteile vorgesehene, der Feder zugeordnete, beispielsweise an wenigstens einem Ende offene Aufnahmenut aus. Die Feder greift in die Aufnahmenut ein. Die Feder und die Aufnahmenut weisen zumindest abschnittsweise einen komplementären, formschlüssig ineinander greifenden Querschnitt auf. Die komplementären Querschnitte der schrägen Flanken und der Aufnahmenut bilden normal zur Aufnahmenut eine Hintergreifung, so dass die Verbindungsanordnung in der Lage ist, sowohl Querkräfte, als auch Druck- und Zugkräfte sowie Momente um alle drei Raumrichtungen zwischen dem ersten und dem zweiten Bauteil zu übertragen.

Die Feder und die Aufnahmenut können schwalbenschwanzartig inneinandergreifen, oder wie bei Turboluftfahrtantrieben zur Verbindung von Schaufeln und Welle eines Rotors bekannt, tannenbaumfußartig ineinandergreifen.

Aufnahmenut und Feder können in Richtung einer Längserstreckung der Verbindungsanordnung konisch verjüngend ausgestaltet sein. Dadurch kann die Feder senkrecht zur Aufnahmenut in diese eingesetzt und anschließend die Verbindung durch Ineinanderschieben in Richtung der konischen Verjüngung hergestellt werden.

Alternativ oder zusätzlich ist denkbar, dass die Aufnahmenut wenigstens eine Partie aufweist, welche einen Querschnitt aufweist, der ein Einsetzen der Feder senkrecht zur Aufnahmenut ermöglicht. Ebenfalls ist denkbar, dass die Aufnahmenut zum Einsetzen der Feder wenigstens an einem Ende offen ist. Das eigentliche Herstellen der Verbindung erfolgt anschließend durch Ineinanderschieben der Feder in die Aufnahmenut in Richtung der Längserstreckung der Aufnahmenut bzw. der Verbindungsanordnung.

Die Feder kann in der Aufnahmenut mittels einer Rastverbindung gegen Herausziehen gesichert sein, beispielsweise gegen Herausziehen:
- entgegen der Richtung der konischen Verjüngung, oder
- zu der Partie mit dem das Einsetzen der Feder ermöglichenden Querschnitt der Aufnahmenut hin, oder
- zum offenen Ende der Aufnahmenut hin.
Eine auch als Klipsverbindung oder als Schnappverbindungen bezeichnete Rastverbindung umfasst korrespondierende Rastelemente, von denen wenigstens eines elastisch verformbar ist und bei der Herstellung der Rastverbindung im Anschluss an eine Verformung mit mindestens einem anderen lösbar oder unlösbar verhakt. Beispiele für derart korrespondierende Rastelemente sind eine Hintergreifung und ein in diese eingreifendes elastisch verformbares Rastmittel.

Aufnahmenut und Feder können:
- senkrecht zu oder
- schräg zu oder
- innerhalb
einer durch die miteinander zu verbindenden Bauteile verlaufenden Ebene liegen. Verläuft ein Abschnitt, entlang dem zwei Bauteile miteinander zu verbinden sind, dreidimensional im Raum gekrümmt außerhalb einer Ebene, so können Aufnahmenut und Feder einer Verbindungsanordnung beispielsweise
- lokal senkrecht zu oder
- lokal schräg zu oder
- lokal innerhalb
einer durch die miteinander zu verbindenden Bauteile verlaufenden Fläche liegen.

Auch die Aufnahmenut und die Feder können beispielsweise innerhalb einer Ebene oder dreidimensional im Raum gekrümmt verlaufend ausgeführt sein. Beispielsweise können sowohl Aufnahmenut als auch Feder einer konvexen oder konkaven Kontur eines Abschnitts folgen, entlang dem zwei Bauteile miteinander zu verbinden sind. Die Krümmung kann hierbei konstant sein, wobei die Krümmung auch veränderlich sein kann. Vorzugsweise bleibt die durch das Vorzeichen der Krümmung bestimmte Krümmungsrichtung entlang der Aufnahmenut und der Feder jedoch konstant, so dass die Aufnahmenut und die Feder frei von Wendepunkten sind. Besonders bevorzugt nimmt eine veränderliche Krümmung stetig zu oder ab, wodurch die Montage der Verbindungsanordnung im Vergleich zu einer abschnittsweise zu- und abnehmenden Krümmung wesentlich vereinfacht wird.

Sind mehrere Verbindungsanordnungen zur Verbindung zweier Bauteile vorgesehen, können deren Aufnahmenuten und Federn einem gekrümmten Verlauf folgend angeordnet sein.

Sind mehrere Verbindungsanordnungen zur Verbindung zweier Bauteile vorgesehen, verlaufen deren Aufnahmenuten und Federn bevorzugt parallel zueinander. Bei dem parallelen Verlauf weisen alle Aufnahmenuten und Federn zumindest abschnittsweise die selben Orientierungen im Raum auf.

Eine Verbindung zwischen zwei Bauteilen und/oder Bauteilgruppen des Außenrückblickspiegels kann ausschließlich durch eine oder mehrere der beschriebenen Verbindungsanordnungen hergestellt sein, oder es können zusätzlich zu der wenigstens einen Verbindungsanordnung andere Verbindungsmittel, beispielsweise Schrauben, Rastverbindungen etc. vorgesehen sein. Sind mehrere der beschriebenen Verbindungsanordnungen vorgesehen, so können diese beispielsweise zur Vereinfachung der Montage gleich oder zur Vermeidung von Fehlern bei der Herstellung von Verbindungen zwischen mehreren Bauteilen unterschiedlich ausgeführt sein.

Der Außenrückblickspiegel besteht vorzugsweise wenigstens aus einem Außenrückblickspiegelgehäuse, in dem weitere Bauteile zumindest zu Teil beherbergt sein können. Das Außenrückblickspiegelgehäuse kann wenigstens einen Grundträger beherbergen, auf dem ein Spiegelglas beispielsweise elektromotorisch verstellbar angeordnet sein kann. An seiner Rückseite weist das Außenrückblickspiegelgehäuse eine Öffnung für das Spiegelglas auf. Das Außenrückblickspiegelgehäuse kann wenigstens aus einem ersten Gehäuseteil und einem zweiten Gehäuseteil bestehen, welche beide mit dem gegebenenfalls vorgesehenen Grundträger verbunden sein können. Eines der beiden Gehäuseteile kann eine um die Öffnung für das Spiegelglas herumliegende Gehäusepartie mit die Öffnung umgebenden Wandungen umfassen. Das erste Gehäuseteil und das zweite Gehäuseteil grenzen entlang mindestens eines Verbindungsstoßes aneinander an. Die Gehäuseteile können mittels wenigstens einer Verbindungsanordnung miteinander oder mit einem anderen, zumindest zum Teil in dem Außenrückblickspiegelgehäuse beherbergten Bauteil verbunden sein.

Wenigstens bei einem ersten Bauteil, das mittels der Verbindungsanordnung mit einem zweiten Bauteil verbunden ist, kann es sich um ein zumindest teilweise in dem Außenrückblickspiegelgehäuse untergebrachtes Wiederholblinkleuchtenmodul für eine Wiederholblinkleuchte mit zumindest einer zur Erfüllung einer Wiederholblinklichtfunktion vorgesehenen, mindestens eine Lichtaustrittsfläche umfassenden Partie handeln. Bei dem zweiten Bauteil handelt es sich bevorzugt um das Außenrückblickspiegelgehäuse des Außenrückblickspiegels oder ein Gehäuseteil eines mehrteiligen Außenrückblickspiegelgehäuses. Die zumindest eine Partie erstreckt sich dabei vorzugsweise zumindest entlang eines Abschnitts zwischen dem ersten Gehäuseteil und dem zweiten Gehäuseteil des Außenrückblickspiegelgehäuses.

Vorteile der Erfindung gegenüber dem Stand der Technik ergeben sich unter anderem durch eine einfache und fehlerarme Herstellung der Verbindung zwischen Bauteilen und Bauteilgruppen verbunden mit einem geringen Montageaufwand und geringen Montagekosten. Der Aufbau eines mehrteiligen Außenrückblickspiegels wird durch Verbindung zweier Bauteile oder Bauteilgruppen mittels der erfindungsgemäßen Verbindungsanordnung so vereinfacht, dass beispielsweise ein Wiederholblinkleuchtenmodul mit einer Wiederholblinkleuchte auf einfache und reproduzierbare Weise in einem Außenrückblickspiegel installiert werden kann. Darüber hinaus sind die beschriebenen Verbindungsanordnungen kostengünstiger in der Herstellung, als z.B. Quer- und Zugkräfte übertragende Rastverbindungen.

Weitere Vorteile der Erfindung gegenüber dem Stand der Technik ergeben sich unter anderem durch ein einfaches, durch die Verbindungsanordnung geschaffenes Montagekonzept für den Außenrückblickspiegel, welches ohne zeitaufwändige Verbindungsmethoden auskommt. Dadurch wird eine zeitsparende und kostengünstige Herstellung des Außenrückblickspiegels ermöglicht. Die Verbindungsanordnung eignet sich für Verbindungen beispielsweise zumindest sowohl zwischen Gehäuseteilen untereinander, als auch zwischen Gehäuseteilen und weiteren Bauteilen, wie etwa einem Wiederholblinkleuchtenmodul.

Wichtig ist hervorzuheben, dass die Ausdrücke erstes und zweites Bauteil, erstes und zweites Gehäuseteil, sowie allgemein die Begriffe erste, zweite keine Reihenfolge oder konkrete Anleitung zur Anordnung bezeichnen, sondern lediglich einer Unterscheidung dienen und beliebig austauschbar sind.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigen in schematischer Darstellung:
- Fig. 1: eine Außenrückblickspiegelanordnung in perspektivischer Ansicht.
- Fig. 2: eine Prinzipdarstellung einer Verbindungsanordnung in Fig. 2 a) in auseinander gebautem Zustand in perspektivischer Ansicht, in Fig. 2b) in auseinander gebautem Zustand in einer Seitenansicht, in Fig. 2c) in zusammengebautem Zustand in perspektivischer Ansicht und in Fig. 2 d) in zusammengebautem Zustand in einer Seitenansicht.
- Fig. 3: eine Verbindung zwischen einem ersten Bauteil und einem zweiten Bauteil mittels mehrerer Verbindungsanordnungen in einer ersten perspektivischen Ansicht.
- Fig. 4: die Verbindung aus Fig. 3 in einer zweiten perspektivischen Ansicht.
- Fig. 5: ein erstes zumindest zweiteiliges Außenrückblickspiegelgehäuse, wobei Fig. 5 a) ein den Gehäuseboden bildendes erstes Gehäuseteil in einer Vorderansicht zeigt, und Fig. 5 b) ein den Gehäusedeckel bildendes zweites Gehäuseteil in einer Vorderansicht zeigt, wobei das erste Gehäuseteil eine um die Öffnung für ein Spiegelglas herumliegende Gehäusepartie mit die Öffnung umgebenden Wandungen umfasst.
- Fig. 6: ein zweites zumindest zweiteiliges Außenrückblickspiegelgehäuse, wobei Fig. 6 a) ein den Gehäuseboden bildendes erstes Gehäuseteil in einer Draufsicht zeigt, und Fig. 6 b) ein den Gehäusedeckel bildendes zweites Gehäuseteil in perspektivischer Ansicht zeigt, wobei das zweite Gehäuseteil eine um die Öffnung für ein Spiegelglas herumliegende Gehäusepartie mit die Öffnung umgebenden Wandungen umfasst.
- Fig. 7: ein erstes mit einem Außenrückblickspiegelgehäuse zu verbindendes Widerholblinkleuchtenmodul in Fig. 7 a) in einer Vorderansicht und in Fig. 7 b) in einer Draufsicht.
- Fig. 8: ein zweites mit einem Außenrückblickspiegelgehäuse zu verbindendes Widerholblinkleuchtenmodul in einer perspektivischen Ansicht.
- Fig. 9: ein drittes mit einem Außenrückblickspiegelgehäuse zu verbindendes Widerholblinkleuchtenmodul in einer perspektivischen Ansicht.

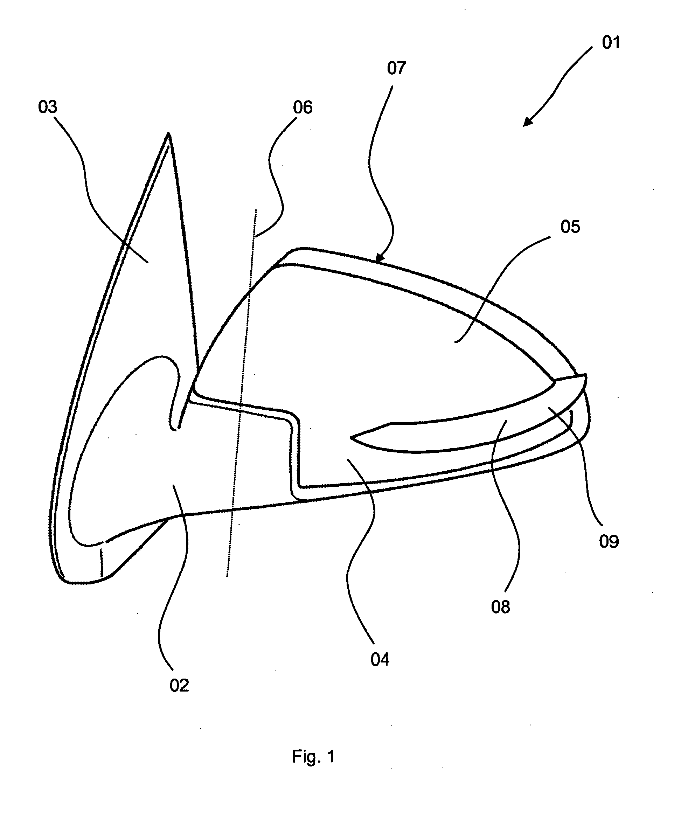

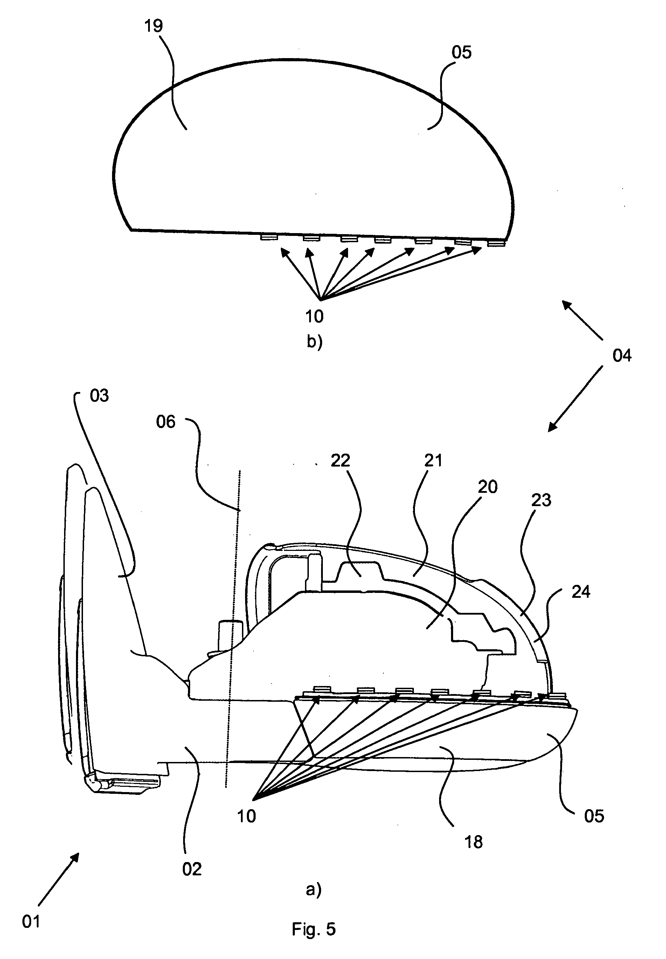

Eine in Fig. 1 dargestellte Außenrückblickspiegelanordnung 01 für ein Kraftfahrzeug besteht aus einem an dem Kraftfahrzeug anordbaren bzw. angeordneten Spiegelfuß 02, welcher mittels einer Spiegelfußabdeckung 03 verkleidet sein kann, und einem an dem Spiegelfuß 02 angeordneten Außenrückblickspiegel 04. Der Außenrückblickspiegel 04 besteht aus mehreren, mindestens jedoch zwei miteinander verbundenen Bauteilen. Beispielsweise umfasst der Außenrückblickspiegel 04 ein Außenrückblickspiegelgehäuse 05, in dem unter anderem ein dem Spiegelfuß 02 zugeordneter Grundträger 20 (Fig. 5) beherbergt sein kann. Spiegelfuß 02 und Grundträger 20 sind gelenkig miteinander verbunden, so dass der Außenrückblickspiegel 04 gegenüber dem Spiegelfuß 02 aus einer Betriebsstellung in eine Anklappstellung und umgekehrt um eine Gelenkachse 06 verschwenkbar ist. Das Außenrückblickspiegelgehäuse 05 weist auf seiner in Betriebsstellung der Fahrtrichtung des Kraftfahrzeugs abgewandten Rückseite 07 eine Öffnung 21 auf, durch welche hindurch ein Spiegelglas sichtbar ist bzw. in welcher ein Spiegelglas angeordnet ist. Das Spiegelglas kann auf einer Trägerplatte 22 angeordnet sein, welche mittels einer beispielsweise elektromotorisch betätigbaren Verstellanordnung beispielsweise auf dem Grundträger 20 verstellbar im Außenrückblickspiegelgehäuse 05 gelagert ist.

Der Außenrückblickspiegel 04 kann ein zumindest teilweise in dem Außenrückblickspiegelgehäuse 05 untergebrachtes Wiederholblinkleuchtenmodul 08 für eine Wiederholblinkleuchte mit zumindest einer zur Erfüllung einer Wiederholblinklichtfunktion vorgesehenen, mindestens eine Lichtaustrittsfläche 09 umfassenden Partie aufweisen. Das Wiederholblinkleuchtenmodul 08 ist beispielsweise mit dem Außenrückblickspiegelgehäuse 05 verbunden.

Zumindest zwei Bauteile des Außenrückblickspiegels 04, beispielsweise das Außenrückblickspiegelgehäuse 05 und der Grundträger sowie gegebenenfalls alternativ oder zusätzlich das Außenrückblickspiegelgehäuse 05 und das Wiederholblinkleuchtenmodul 08, können derart miteinander verbunden sein, dass über die Verbindung hinweg sowohl Kräfte und Momente entlang bzw. um beliebig im Raum liegende Achsen zwischen den beiden Bauteilen übertragen werden können.

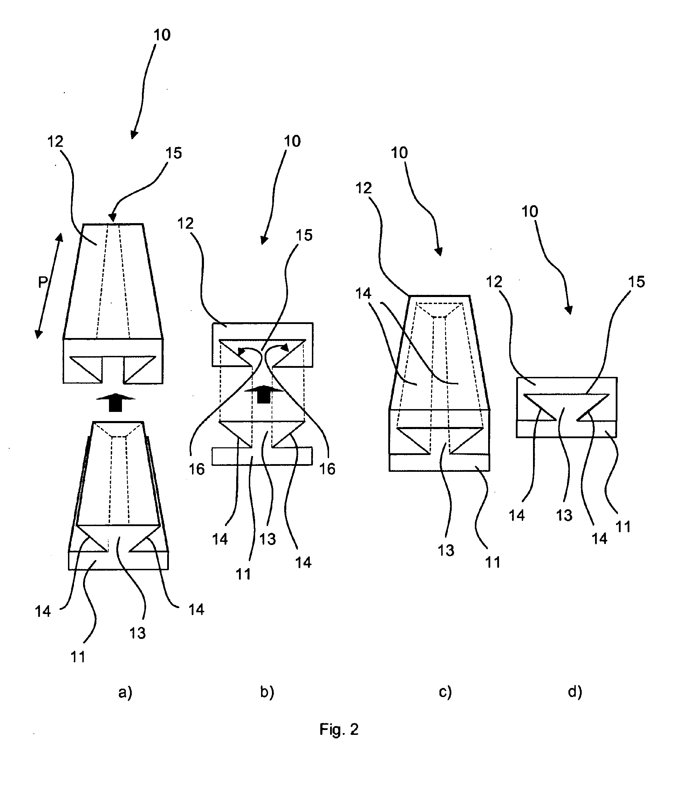

Zumindest eine Verbindung zwischen zwei Bauteilen des Außenrückblickspiegels 04 umfasst wenigstens eine in ihrem Grundprinzip in den Fig. 2a), b), c) und d) dargestellte Verbindungsanordnung 10, welche zur Übertragung sowohl von Querkräften, als auch von Druck- und Zugkräften sowie von Momenten von einem ersten Bauteil 11 auf ein zweites Bauteil 12 geeignet ist. Die Verbindungsanordnung 10 umfasst eine an dem ersten Bauteil 11 angeordnete Feder 13 mit von dem ersten Bauteil 11 aus gesehen zumindest abschnittsweise divergierenden, schrägen Flanken 14 und eine an dem zweiten Bauteil 12 vorgesehene, der Feder 13 zugeordnete Aufnahmenut 15. Die Feder 13 greift in die Aufnahmenut 15 ein (Fig. 2c) und d)). Feder 13 und Aufnahmenut 15 weisen zumindest abschnittsweise einen derart komplementären, formschlüssig ineinander greifenden Querschnitt auf, dass die schrägen Flanken 14 und die Aufnahmenut 15 normal zur Aufnahmenut 15 eine Hintergreifung 16 bilden (Fig. 2b)).

Die Feder 13 und die Aufnahmenut 15 können dabei beispielsweise schwalbenschwanzartig oder tannenbaumfußartig ineinandergreifen. Alternativ oder zusätzlich können die Aufnahmenut 15 und die Feder 13 in Richtung einer durch einen Doppelpfeil P in Fig. 2 a) schematisch dargestellten Längserstreckung der Verbindungsanordnung 10 konisch verjüngend ausgestaltet sein.

Die Aufnahmenut 15 kann wie in den Fig. 2, 3 und 4 dargestellt wenigstens an einem Ende offen sein, um durch seitliches Einschieben vom Ende aus ein Einsetzen der Feder 13 zu ermöglichen.

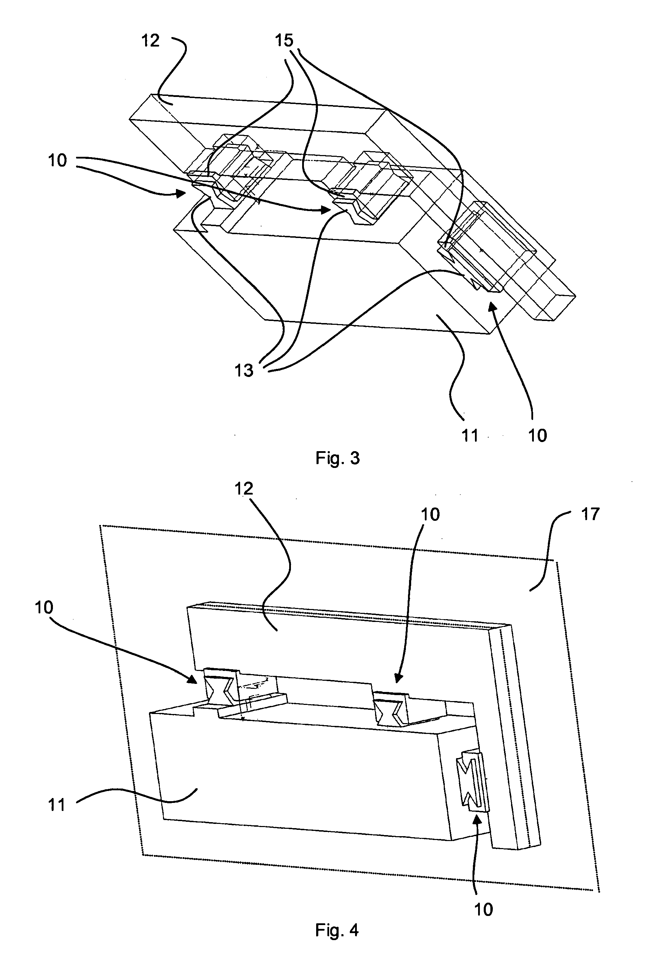

Eine Verbindung zwischen einem ersten Bauteil 11 und einem zweiten Bauteil 12 kann unter Verwendung einer oder wie in den Fig. 3 und 4 angedeutet mehrerer Verbindungsanordnungen 10 erfolgen. Die Aufnahmenut 15 und die Feder 13 der einen oder mehreren Verbindungsanordnungen 10 können wie in den Fig. 3 und 4 dargestellt senkrecht zu einer durch die miteinander zu verbindenden Bauteile 11, 12 verlaufenden Ebene 17 liegen (Fig. 4). Auch eine Orientierung schräg hierzu oder innerhalb der Ebene 17 ist denkbar. Verläuft ein Abschnitt, entlang dem die Bauteile miteinander zu verbinden sind außerhalb einer Ebene, z.B. dreidimensional im Raum gekrümmt, so können die Aufnahmenut 15 und die Feder 13 lokal senkrecht oder lokal schräg zu einer zumindest abschnittsweise durch die miteinander zu verbindenden Bauteile 11, 12 verlaufenden Fläche liegen oder lokal innerhalb der zumindest abschnittsweise durch die miteinander zu verbindenden Bauteile 11, 12 verlaufenden Fläche. Dabei können die Aufnahmenuten 15 und Federn 13 der mehreren zur Herstellung der Verbindung zwischen dem ersten Bauteil 11 und dem zweiten Bauteil 12 vorgesehenen Verbindungsanordnungen 10 zumindest abschnittsweise die selben Orientierungen im Raum aufweisen.

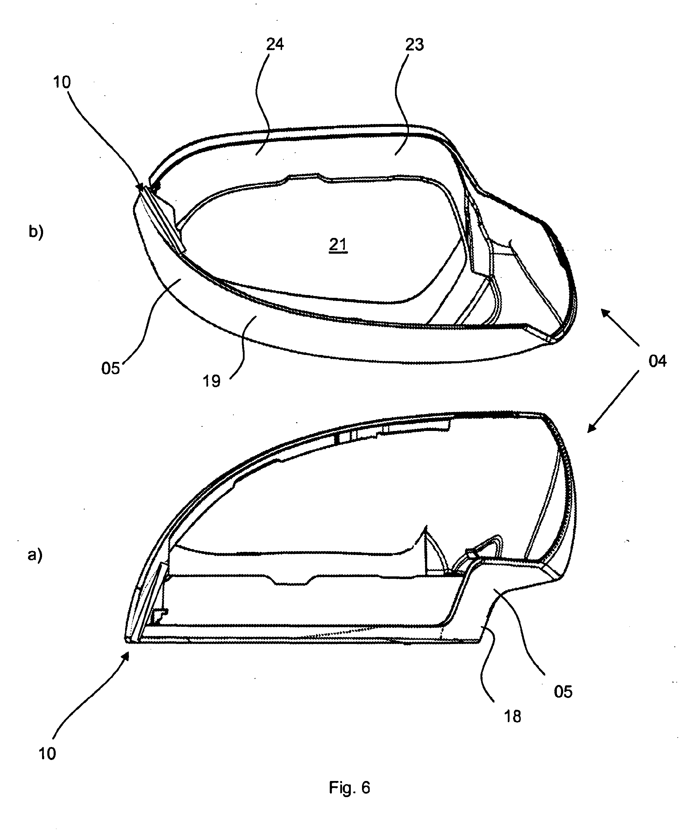

Das Außenrückblickspiegelgehäuse 05 kann wie in Fig. 1 dargestellt einteilig oder wie in den Fig. 5 und Fig. 6 dargestellt zwei- oder mehrteilig ausgeführt sein.

Sowohl das in Fig. 5 dargestellte Außenrückblickspiegelgehäuse 05, als auch das in Fig. 6 dargestellte Außenrückblickspiegelgehäuse 05 besteht wenigstens aus einem ersten Gehäuseteil 18 und einem zweiten Gehäuseteil 19, welche beide beispielsweise mittels einer oder mehreren Verbindungsanordnungen 10 mit einem gegebenenfalls im Außenrückblickspiegelgehäuse 05 vorgesehenen Grundträger 20 verbunden sein können. Eines der beiden Gehäuseteile 18, 19 kann eine um die Öffnung 21 für das Spiegelglas herumliegende Gehäusepartie 23 mit die Öffnung 21 umgebenden Wandungen 24 umfassen. Das erste Gehäuseteil 18 und das zweite Gehäuseteil 19 können entlang mindestens eines Verbindungsstoßes aneinander angrenzen.

Bei den Außenrückblickspiegelgehäusen 05 in den Fig. 5 und 6 bildet das erste Gehäuseteil 18 einen Gehäuseboden, wohingegen das zweite Gehäuseteil 19 einen Gehäusedeckel bildet. Bei dem Außenrückblickspiegelgehäuse 05 in Fig. 5 umfasst das erste Gehäuseteil 18 die um die Öffnung 21 für das Spiegelglas herumliegende Gehäusepartie 23 mit den die Öffnung 21 umgebenden Wandungen 24. Bei dem Außenrückblickspiegelgehäuse 05 in Fig. 6 umfasst das zweite Gehäuseteil 19 die um die Öffnung 21 für das Spiegelglas herumliegende Gehäusepartie 23 mit den die Öffnung 21 umgebenden Wandungen 24.

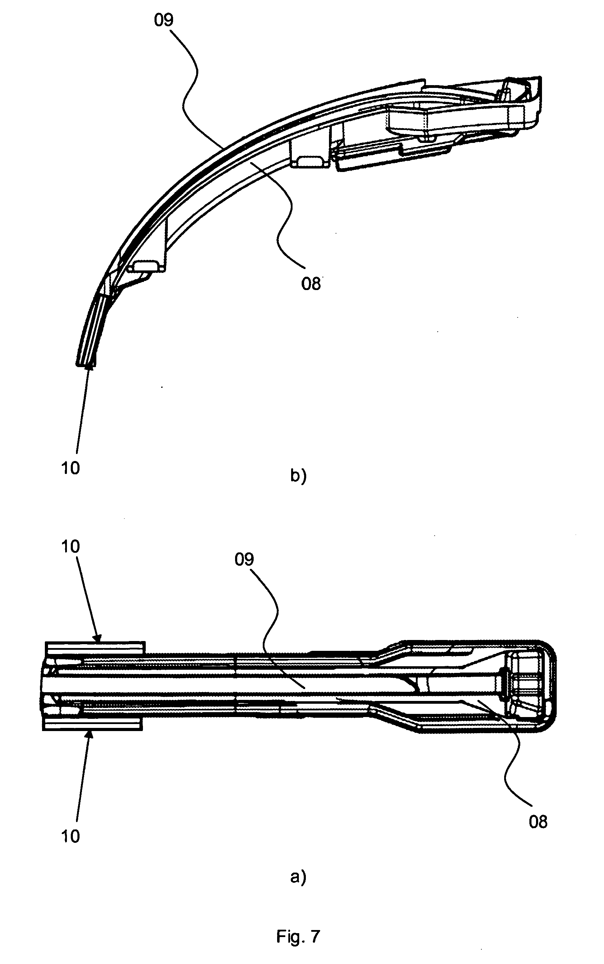

Die Gehäuseteile 18, 19 können mittels wenigstens einer Verbindungsanordnung 10 miteinander oder mit einem anderen, zumindest zum Teil in dem Außenrückblickspiegelgehäuse 05 beherbergten Bauteil, beispielsweise einem Wiederholblinkleuchtenmodul 08 (Fig. 7, 8, 9) verbunden sein. Dabei ist es grundsätzlich unerheblich, an welchem der beiden Gehäuseteile 18, 19 bzw. Wiederholblinkleuchtenmodule 08 Aufnahmenuten 15 oder Federn 13 angeordnet sind, weshalb der Einfachheit halber an jedem der Gehäuseteile 18, 19 und der Wiederholblinkleuchtenmodule 08 eine Verbindungsanordnung 10 stellvertretend für die frei wählbare Anordnung einer Aufnahmenut 15 oder einer Feder 13 bezeichnet ist.

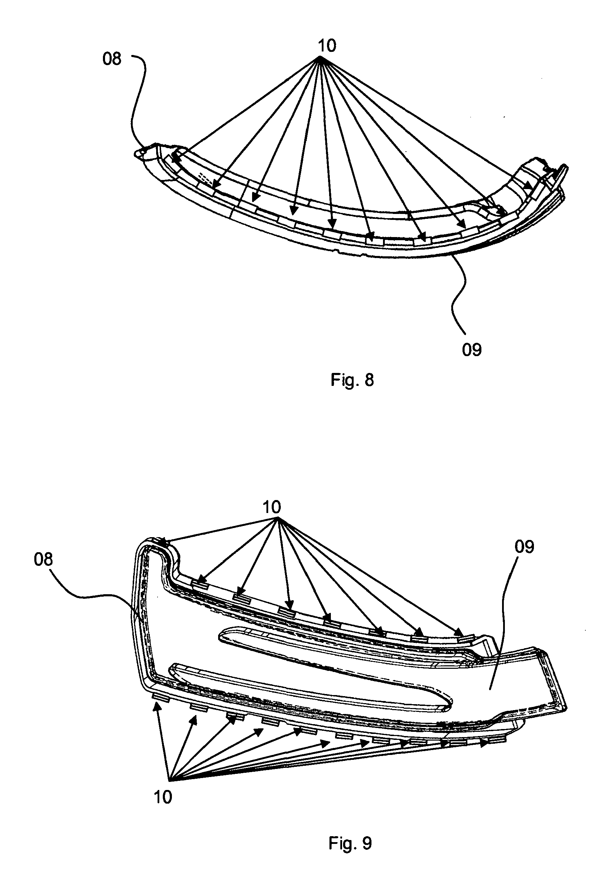

Beispielsweise sind bei dem Außenrückblickspiegel 04 der in Fig. 5 dargestellten Außenrückblickspiegelanordnung 01 mehrere Verbindungsanordnungen 10 zur Verbindung des ersten Gehäuseteils 18 und des zweiten Gehäuseteils 19 sowie zumindest entlang eines Abschnitts des Verbindungsstoßes zwischen den Gehäuseteilen 18, 19 zur Verbindung des ersten Gehäuseteils 18 mit einem in Fig. 8 oder 9 dargestellten Wiederholblinkleuchtenmodul 08 sowie des zweiten Gehäuseteils 19 mit dem Wiederholblinkleuchtenmodul 08 vorgesehen. Die zumindest eine die wenigstens eine Lichtaustrittsfläche 09 umfassende Partie für die Wiederholblinklichtfunktion des Wiederholblinkleuchtenmoduls 08 erstreckt sich dabei vorzugsweise zumindest entlang eines Abschnitts des Verbindungsstoßes zwischen dem ersten Gehäuseteil 18 und dem zweiten Gehäuseteil 19 des Außenrückblickspiegelgehäuses 05.

Die Aufnahmenuten 15 und Federn 13 der Verbindungsanordnungen 10 sind dabei einem gekrümmten Verlauf der Kontur des Verbindungsstoßes bzw. Abschnitts zwischen den miteinander zu verbindenden Bauteilen, hier den Gehäuseteilen 18, 19 und dem Wiederholblinkleuchtenmodul 08, folgend angeordnet. Beispielsweise bei Verbindungsanordnungen 10 mit einer langen Längserstreckung können alternativ oder zusätzlich die Aufnahmenuten 15 und die Federn 13 der Krümmung der Kontur folgend gekrümmt sein.

Beispielsweise ist bei dem Außenrückblickspiegel 04 in Fig. 6 jeweils eine Verbindungsanordnungen 10 zur Verbindung des ersten Gehäuseteils 18 beispielsweise mit dem in Fig. 7 dargestellten Wiederholblinkleuchtenmodul 08 sowie des zweiten Gehäuseteils 19 mit dem Wiederholblinkleuchtenmodul 08 vorgesehen. Auch hier erstreckt sich die zumindest eine die wenigstens eine Lichtaustrittsfläche 09 umfassende Partie für die Wiederholblinklichtfunktion des Wiederholblinkleuchtenmoduls 08 vorzugsweise zumindest entlang eines Abschnitts zwischen dem ersten Gehäuseteil 18 und dem zweiten Gehäuseteil 19 des Außenrückblickspiegelgehäuses 05.

Bei den Außenrückblickspiegeln 04 mit mehrteiligem Außenrückblickspiegelgehäusen 05 in den Fig. 5 und 6 erstreckt sich die mindestens eine die wenigstens eine zur Erfüllung der Wiederholblinklichtfunktion vorgesehene Lichtaustrittsfläche 09 umfassende Partie des Wiederholblinkleuchtenmoduls 08 vorzugsweise zumindest zwischen dem ersten Gehäuseteil 18 und dem zweiten Gehäuseteil 19 des Außenrückblickspiegelgehäuses 05. Die mindestens eine Partie grenzt hierbei entlang jeweils eines Abschnitts an beide der zumindest zwei Gehäuseteile 18, 19 an. Zumindest grenzt die Partie entlang wenigstens eines ersten Abschnitts an das erste Gehäuseteil 18 und entlang wenigstens eines zweiten Abschnitts an das zweite Gehäuseteil 19 an. Entlang dieser Abschnitte ist denkbar, dass die Gehäuseteile 18, 19 nicht direkt, sondern über das Wiederholblinkleuchtenmodul 08 indirekt miteinander verbunden sind.

Ebenfalls ist denkbar, ein Wiederholblinkleuchtenmodul 08 in einem einteiligen Außenrückblickspiegelgehäuse 05 oder innerhalb eines Gehäuseteils 18, 19 eines mehrteiligen Außenrückblickspiegelgehäuses 05 vorzusehen. Hierzu kann das Außenrückblickspiegelgehäuse 05 bzw. eines der Gehäuseteil 18, 19 mindestens eine der zumindest einen Lichtaustrittsfläche 09 zugeordnete Ausnehmung aufweisen, welche von der Lichtaustrittsfläche 09 vorzugsweise vollständig eingenommen wird. Die Ausnehmung kann zumindest zum Teil als Öffnung ausgeführt sein.

Die Lichtaustrittsfläche 09 des Wiederholblinkleuchtenmoduls 08 kann generell beliebig gestaltet sein, ebenso die Ausnehmung im Außenrückblickspiegelgehäuse 05 bzw. zwischen den Gehäuseteilen 18, 19, durch welche hindurch die Lichtaustrittsfläche 09 sichtbar ist und/oder hindurch reicht.

Der Außenrückblickspiegel 04 kann Verbindungsanordnungen 10 zur Herstellung von Verbindungen wenigstens sowohl zwischen den Gehäuseteilen 18, 19 des zumindest zweiteiligen Außenrückblickspiegelgehäuses 05 untereinander, als auch zwischen den Gehäuseteilen 18, 19 des zumindest zweiteiligen Außenrückblickspiegelgehäuses 05 und zumindest zum Teil im Inneren des Außenrückblickspiegelgehäuses 05 beherbergten Bauteilen, wie etwa einem Wiederholblinkleuchtenmodul 08 und/oder einem Grundträger 20, vorsehen.

Der Außenrückspiegel 04 kann alternativ oder zusätzlich zu dem Wiederholblinkleuchtenmodul 08 ein Modul und/oder einen Sensor einer Fahrassistenzvorrichtung und/oder ein Modul und/oder einen Sensor zur Steuerung einer Fahrzeugfunktion, wie beispielsweise zur Steuerung einer Beheizung und/oder automatischen Abblendung des Spiegelglases aufweisen. Bei dem Modul und/oder Sensor für eine Fahrassistenzvorrichtung kann es sich beispielsweise um ein Anzeigemodul einer Totwinkelüberwachung, eine Spurverlasswarnung oder einer Annäherungsüberwachung, einen Empfänger zur satellitengestützten Positionsbestimmung oder dergleichen, oder eine Kombination hiervon handeln. Bei dem Modul und/oder dem Sensor zur Steuerung einer Fahrzeugfunktion kann es sich beispielsweise um einen Temperatursensor und/oder einen Helligkeitssensor handeln. Das jeweilige Modul bzw. der jeweilige Sensor können mit dem Außenrückblickspiegelgehäuse 05 oder mit einem der beiden Gehäuseteile 18, 19 oder mit einem Gehäuseteil 18 oder 19 oder mit einem wenigstens zum Teil im Inneren des Außenrückblickspiegelgehäuses 05 beherbergten Bauteil mittels wenigstens einer Verbindungsanordnung 10 verbunden sein.

Wichtig ist hervorzuheben, dass die Feder 13 und die Aufnahmenut 15 einer Verbindungsanordnung 10 am jeweiligen Bauteil beispielsweise angespritzt sein kann.

Die Erfindung ist insbesondere im Bereich der Herstellung von Außenrückblickspiegeln 04 und Außenrückblickspiegelanordnungen 01 für Kraftfahrzeuge gewerblich anwendbar.

### Bezugszeichenliste

- 01: Außenrückblickspiegelanordnung
- 02: Spiegelfuß
- 03: Spiegelfußabdeckung
- 04: Außenrückblickspiegel
- 05: Außenrückblickspiegelgehäuse
- 06: Gelenkachse
- 07: Rückseite
- 08: Wiederholblinkleuchtenmodul
- 09: Lichtaustrittsfläche
- 10: Verbindungsanordnung
- 11: erstes Bauteil
- 12: zweites Bauteil
- 13: Feder
- 14: Flanke
- 15: Aufnahmenut
- 16: Hintergreifung
- 17: Ebene
- 18: erstes Gehäuseteil
- 19: zweites Gehäuseteil
- 20: Grundträger
- 21: Öffnung
- 22: Trägerplatte
- 23: Gehäusepartie
- 24: Wandung

- P: Längserstreckung der Aufnahmenut bzw. der Verbindungsanordnung

## Patentansprüche

1. Außenrückblickspiegel (04) für ein Kraftfahrzeug, welcher aus mindestens zwei miteinander verbundenen Bauteilen (08, 11, 12, 18, 19, 20, 22) besteht, wobei zumindest eine Verbindung wenigstens eine Verbindungsanordnung (10) umfasst, welche zur Übertragung sowohl von Querkräften, als auch von Druck- und Zugkräften sowie von Momenten von einem ersten Bauteil (08, 11, 12, 18, 19, 20, 22) auf ein zweites Bauteil (08, 11, 12, 18, 19, 20, 22) geeignet ist,
**dadurch gekennzeichnet,**
**dass** die Verbindungsanordnung (10) eine an dem ersten Bauteil (08, 11, 12, 18, 19, 20, 22) angeordnete Feder (13) mit von dem ersten Bauteil (08, 11, 12, 18, 19, 20, 22) aus gesehen zumindest abschnittsweise divergierenden, schrägen Flanken (14) und eine an dem zweiten Bauteil (08, 11, 12, 18, 19, 20, 22) vorgesehene, der Feder (13) zugeordnete Aufnahmenut (15) umfasst, wobei die Feder (13) in die Aufnahmenut (15) eingreift und Feder (13) und Aufnahmenut (15) zumindest abschnittsweise einen derart komplementären, formschlüssig ineinander greifenden Querschnitt aufweisen, dass die schrägen Flanken (14) und die Aufnahmenut (15) normal zur Aufnahmenut (15) eine Hintergreifung (16) bilden.

2. Außenrückblickspiegel nach Anspruch 1,
**dadurch gekennzeichnet,**
**dass** Feder (13) und Aufnahmenut (15) schwalbenschwanzartig oder tannenbaumfußartig ineinandergreifen.

3. Außenrückblickspiegel nach Anspruch 1 oder 2,
**dadurch gekennzeichnet,**
**dass** Aufnahmenut (15) und Feder (13) in Richtung einer Längserstreckung (P) der Verbindungsanordnung (10) konisch verjüngend ausgestaltet sind.

4. Außenrückblickspiegel nach Anspruch 1, 2 oder 3,
**dadurch gekennzeichnet,**
**dass** die Aufnahmenut (15) wenigstens eine Partie aufweist, welche einen Querschnitt aufweist, der ein Einsetzen der Feder (13) senkrecht zur Aufnahmenut (15) ermöglicht.

5. Außenrückblickspiegel nach einem der vorhergehenden Ansprüche,
**dadurch gekennzeichnet,**
**dass** die Aufnahmenut (15) zum Einsetzen der Feder (13) wenigstens an einem Ende offen ist.

6. Außenrückblickspiegel nach einem der vorhergehenden Ansprüche,
**dadurch gekennzeichnet,**
**dass** die Feder (13) in der Aufnahmenut (15) mittels einer Rastverbindung gegen Herausziehen gesichert ist.

7. Außenrückblickspiegel nach einem der vorhergehenden Ansprüche,
**dadurch gekennzeichnet,**
**dass** die Aufnahmenut (15) und die Feder (13) lokal senkrecht oder schräg zu oder lokal innerhalb einer zumindest abschnittsweise durch die miteinander zu verbindenden Bauteile (08, 11, 12, 18, 19, 20, 22) verlaufenden Fläche (17) liegen.

8. Außenrückblickspiegel nach einem der vorhergehenden Ansprüche,
**dadurch gekennzeichnet,**
**dass** die Aufnahmenut (15) und die Feder (13) gekrümmt sind.

9. Außenrückblickspiegel nach einem der vorhergehenden Ansprüche,
**dadurch gekennzeichnet,**
**dass** mehrere Verbindungsanordnungen (10) zur Verbindung zweier Bauteile (08, 11, 12, 18, 19, 20, 22) vorgesehen sind, deren Aufnahmenuten (15) und Federn (13) einem gekrümmten Verlauf folgend angeordnet sind.

10. Außenrückblickspiegel nach einem der vorhergehenden Ansprüche,
**dadurch gekennzeichnet,**
**dass** mehrere Verbindungsanordnungen (10) zur Verbindung zweier Bauteile (08, 11, 12, 18, 19, 20, 22) vorgesehen sind, deren Aufnahmenuten (15) und Federn (13) zumindest abschnittsweise die selben Orientierungen im Raum aufweisen.

11. Außenrückblickspiegel nach einem der vorhergehenden Ansprüche,
**dadurch gekennzeichnet,**
**dass** die Verbindung zwischen den Bauteilen (08, 11, 12, 18, 19, 20, 22) zusätzlich zu der wenigstens einen Verbindungsanordnung (10) mindestens ein weiteres Verbindungsmittel aufweist.

12. Außenrückblickspiegel nach einem der vorhergehenden Ansprüche,
**dadurch gekennzeichnet,**
**dass** wenigstens das erste Bauteil ein Wiederholblinkleuchtenmodul (08) und das zweite Bauteil ein Außenrückblickspiegelgehäuse (05) oder ein Gehäuseteil (18, 19) eines mehrteiligen Außenrückblickspiegelgehäuses (05) ist.

## Claims

1. An external rear view mirror (04) for a motor vehicle, which mirror consists of at least two interconnected components (08, 11, 12, 18, 19, 20, 22), wherein at least one connection comprises at least one connective assembly (10) suited to transmit both lateral forces and compressive and tensile forces as well as moments from a first component (08, 11, 12, 18, 19, 20, 22) to a second component (08, 11, 12, 18, 19, 20, 22),
**characterized in that**
said connective assembly (10) comprises a spring (13) arranged on the first component (08, 11, 12, 18, 19, 20, 22), which spring has inclined flanks (14) that diverge at least in sections if seen from the first component (08, 11, 12, 18, 19, 20, 22), and a receiving groove (15) arranged on the second component (08, 11, 12, 18, 19, 20, 22) and intended to receive said spring (13), wherein the spring (13) engages with the receiving groove (15), and the spring (13) and the receiving groove (15) have a complementary, positive-fit cross-section at least in sections, such that the inclined flanks (14) are in flat contact (16) with the receiving groove (15) normal to said receiving groove (15).

2. The external rear view mirror according to claim 1,
**characterized in that**
the spring (13) and the receiving groove (15) engage with each other in a manner resembling a dovetail or the base of a fir tree.

3. The external rear view mirror according to claim 1 or 2,
**characterized in that**
the receiving groove (15) and the spring (13) are conically tapered in the direction of a longitudinal extent (P) of the connective assembly (10).

4. The external rear view mirror according to claim 1, 2 or 3,
**characterized in that**
the receiving groove (15) has at least one part whose cross-section allows for insertion of the spring (13) at right angles to the receiving groove (15).

5. The external rear view mirror according to any one of the preceding claims,
**characterized in that**
the receiving groove (15) is open at least at one end to allow for insertion of the spring (13).

6. The external rear view mirror according to any one of the preceding claims,
**characterized in that**
the spring (13) is secured in the receiving groove (15) by means of a snap-fit connection to prevent it from being pulled out.

7. The external rear view mirror according to any one of the preceding claims,
**characterized in that**
in some places, the receiving groove (15) and the spring (13) are positioned at right angles or oblique to or within a plane (17) extending, at least in sections, through the components (08, 11, 12, 18, 19, 20, 22) that are to be interconnected.

8. The external rear view mirror according to any one of the preceding claims,
**characterized in that**
the receiving groove (15) and the spring (13) are curved.

9. The external rear view mirror according to any one of the preceding claims,
**characterized in that**
several connective assemblies (10) are provided to interconnect two components (08, 11, 12, 18, 19, 20, 22) whose receiving grooves (15) and springs (13) are arranged so as to follow a curved line.

10. The external rear view mirror according to any one of the preceding claims,
**characterized in that**
several connective assemblies (10) are provided to interconnect two components (08, 11, 12, 18, 19, 20, 22) whose receiving grooves (15) and springs (13) are oriented in the same direction in space at least in sections.

11. The external rear view mirror according to any one of the preceding claims,
**characterized in that**
the connection between the components (08, 11, 12, 18, 19, 20, 22) comprises at least one additional means of connection in addition to the at least one connective assembly (10).

12. The external rear view mirror according to any one of the preceding claims,
**characterized in that**
at least the first component is a turn signal repeater module (08) and the second component is an external rear view mirror housing (05) or a housing part (18, 19) of a multi-part external rear view mirror housing (05).

## Revendications

1. Rétroviseur extérieur (04) pour un véhicule à moteur, qui est constitué d'au moins deux composants reliés ensemble (08, 11, 12, 18, 19, 20, 22), de sorte qu'au moins une connexion comporte au moins un agencement de connexion (10), qui est adapté non seulement pour un transfert de forces transversales, mais également de forces de compression et de forces de traction, de même que pour un transfert de moments depuis un premier composant (08, 11, 12, 18, 19, 20, 22) vers le second composant (08, 11, 12, 18, 19, 20, 22),
**caractérisé en ce que**
l'agencement de connexion (10) comporte un ressort (13) agencé sur le premier composant (08, 11, 12, 18, 19, 20, 22), en ayant des flancs obliques (14) qui divergent au moins partiellement, vu par rapport au premier composant (08, 11, 12, 18, 19, 20, 22), et une rainure de réception (15) agencée sur le second composant (08, 11, 12, 18, 19, 20, 22), qui est associée au ressort (13), de sorte que le ressort (13) vient en prise avec la rainure de réception (15), et le ressort (13) et la rainure de réception (15) présentent une coupe transversale complémentaire de verrouillage mutuel par coopération de forme, au moins en partie, de telle manière que les flancs obliques (14) et la rainure de réception (15) forment une prise vers l'arrière (16) par rapport à la rainure de réception (15)

2. Rétroviseur extérieur selon la revendication 1, **caractérisé en ce que** le ressort (13) et la rainure de réception (15) peuvent se verrouiller mutuellement l'un avec l'autre à la manière d'une queue d'aronde, ou à la manière d'une base de sapin de Noël.

3. Rétroviseur extérieur selon les revendications 1 ou 2, **caractérisé en ce que** la rainure de réception (15) et le ressort (13) sont agencés en rétrécissant de manière conique dans la direction d'un prolongement longitudinal (P) de l'agencement de connexion (10).

4. Rétroviseur extérieur selon la revendication 1, 2 ou 3, **caractérisé en ce que** la rainure de réception (15) comporte au moins un tronçon qui présente une coupe transversale qui permet l'insertion du ressort (13) perpendiculairement à la rainure de réception (15).

5. Rétroviseur extérieur selon l'une quelconque des revendications précédentes, **caractérisé en ce que** la rainure de réception (15) est ouverte à au moins une extrémité, pour insertion du ressort (13).

6. Rétroviseur extérieur selon l'une quelconque des revendications précédentes, **caractérisé en ce que** le ressort (13) est protégé d'une extraction au moyen d'une connexion par encliquetage dans la rainure de réception (15).

7. Rétroviseur extérieur selon l'une quelconque des revendications précédentes, **caractérisé en ce que** la rainure de réception (15) et le ressort (13) s'étendent localement perpendiculairement ou selon un angle ou localement à l'intérieur d'une surface (17) s'étendant au moins partiellement à travers les composants (08, 11, 12, 18, 19, 20, 22) devant être reliés ensemble.

8. Rétroviseur extérieur selon l'une quelconque des revendications précédentes, **caractérisé en ce que** le ressort (13) et la rainure de réception (15) sont incurvés.

9. Rétroviseur extérieur selon l'une quelconque des revendications précédentes, **caractérisé en ce que** plusieurs agencements de connexion (10) sont fournis pour connecter deux composants (08, 11, 12, 18, 19, 20, 22), dont les rainures de réception (15) et les ressorts sont agencés suivant un parcours incurvé.

10. Rétroviseur extérieur selon l'une quelconque des revendications précédentes, **caractérisé en ce que** plusieurs agencements de connexion (10) sont fournis pour connecter deux composants (08, 11, 12, 18, 19, 20, 22), dont les rainure de réception (15) et les ressorts (13) ont la même orientation dans l'espace, au moins partiellement.

11. Rétroviseur extérieur selon l'une quelconque des revendications précédentes, **caractérisé en ce que** la connexion entre les composants (08, 11, 12, 18, 19, 20, 22) comporte au moins des moyens de connexion supplémentaire, en plus du au moins un agencement de connexion (10).

12. Rétroviseur extérieur selon l'une quelconque des revendications précédentes, **caractérisé en ce que** le premier composant est un module de clignotant (08), et le seconds composant est un boîtier de rétroviseur extérieur (05), ou une partie de réception (18, 19) d'un boîtier de rétroviseur extérieur (05) en plusieurs parties.
